# EUROPÄISCHE PATENTSCHRIFT

(11) **EP 0 271 847 B1**
(45) Veröffentlichungstag und Bekanntmachung des Hinweises auf die Patenterteilung: **24.02.1993**
(21) Anmeldenummer: 87118428.9
(22) Anmeldetag: 12.12.1987
(51) Int. Cl.: B60N 3/06

(54) **Fussseitenstütze zum Einbau in den Fussraum von Kraftfahrzeugen**
Side rest for a foot for mounting in motor vehicle footwells
Repose-pieds latéral pour montage dans la partie inférieure de l'habitacle de véhicules

(30) Priorität: 15.12.1986 DE 8633485 U
(43) Veröffentlichungstag der Anmeldung: 22.06.1988
(73) Patentinhaber: Fleck, Oskar, D-45711 Datteln (DE)
(72) Erfinder: Fleck, Oskar, D-45711 Datteln (DE)
(74) Vertreter: Hoffmeister, Helmut, Dr. Dipl.-Phys.

(56) Entgegenhaltungen:
- DE-U- 1 821 583
- US-A- 4 010 975

## Beschreibung

Die Erfindung betrifft eine Seitenstütze zum Einbau in den Fußraum auf der rechten Fahrerseite von Kraftfahrzeugen, mit der wenigstens die rechte Ferse des gasgebenden Fußes gestützt werden kann.

Als Seitenstützen zum Einbau in dfen Fußraum von Kraftfahrzeugen sind Fußstützen bekannt (US-PS 4 010 975), auf die der Fahrer seinen rechten Fuß absetzen kann, wobei der Fuß zugleich eine geringe Abstützung auch zur rechten Seite erhält. Die bekannte Vorrichtung wird in Fahrzeuge eingebaut, deren Geschwindigkeit über eine Automatik konstant reguliert wird. Um die Automatik aufzuheben, muß entweder das Gas- oder das Bremspedal getreten werden. Daher ist es für den Fahrer notwendig, seinen Fuß nicht auf einem der Pedale, sondern im Fußraum an einer anderen Stelle zu placieren. Um zu jeder Zeit reaktionsfähig zu sein, ermöglicht die bekannte Seitenstütze es, den rechten Fuß oberhalb der Pedale seitlich neben der Mittelkonsole abzustellen. Dabei erfährt der Fuß u. a. eine leichte seitliche Unterstützung.

In Europa sind nur wenige Fahrzeuge mit einer solchen Automatik ausgerüstet; bei den nicht-automatisierten Fahrzeugen muß daher der rechte Fuß auf dem Gaspedal bleiben, um mit dem Fahrzeug eine bestimmte Geschwindigkeit zu fahren. Eine seitliche Abstützung ist aber mit der bekannten Fußstütze nicht möglich. Darüber hinaus ist zu beachten, daß bei den europäischen Verkehrsverhältnissen ein Fahren mit konstanter Geschwindigkeit nicht derart üblich ist, wie es in den Vereinigten Staaten. Ein Verbleiben auf dem Gaspedal, um die gewünschte Geschwindigkeit einzuhalten, ist daher notwendig.

Ohne Stütze kann es daher in vielen Fällen zu einer ermüdenden und einer die Verkrampfung fördernden Stizhaltung durch Wegknicken des Gelenkes und des Unterschenkels zur rechten Seite hinkommen. Dies wird vor allen Dingen bei langen Fahrten als sehr negativ empfunden.

Der Erfindung liegt damit die Aufgabe zugrunde, durch eine seitliche Kontaktfläche den Fuß und gegebenenfalls den Unterschenkel seitlich abzustützen, um das Bein und den Fuß in einer unverkrampften Position zu halten.

Diese Aufgabe wird bei einer Seitenstütze der eingangs genannten Art dadurch gelöst, daß diese wenigstens einen spitzwinklig-dreieckigen, prismatischen Basisteil aufweist, der bis über die Knöchelhöhe des Fußes reicht.

Der Grundgedanke der Erfindung verkörpert sich damit in dem genannten prismatischen Basisteil. Dieses ist üblicherweise nicht exakt mit einer dreieckigen Grundfläche versehen, sondern weist bereits an der zum Fußknöchel hin zeigenden Seite eine anatomisch kompatible Modulierung auf. Vorteilhafterweise wird dieses Basisteil nach oben hin, vorzugsweise einstückig, verlängert, wobei eine im wesentlichen durchgehende, bis in Kniehöhe reichende, anatomisch modulierte Stützfläche sich an das Basisteil anschließt, wobei diese Teile zusammen ein Stützelement ergeben. Dabei ist es auch möglich, das Basisteil in einem aus Kunststoff hergestelltem Kardantunnel zu integrieren.

Es erweist sich als vorteilhaft, daß an das derartig geformte, gebenenfalls integrierte, Seitenelement sich der Fuß und gegebenenfalls der Unterschenkel des Autofahrers seitlich anlehnen können. Hierdurch wird vermiden, daß das Bein in seiner Lage durch Muskelanspannung gehalten werden muß. Die Seitenstütze ermöglicht es, das Bein des Autofahrers zu entlasten, so daß lediglich eine Auf-und Abbewegung gemäß der Gaspedalbetätigung durch den Fuß vollzogen werden muß. Die Seitenstütze gibt dem Fuß und dem Unterschenkel die notwendige seitliche Anlehnung, um auch bei längeren Autofahrten ein entsprannteres Fahren zu ermöglichen.

Als Vorteil wird weiterhin vorgesehen, daß das Stützelement zwar in sich formstabil ist, jedoch wenigstens an seiner Außenfläche gepolstert ist, so daß ein angenehmes und bequemes Anlegen des Beines und des Fußes ermöglicht wird. Damit bieten sich für die Herstellung der erfindungsgemäßen Seitenstütze vor allen Dingen Kunststoffmaterialien an, die z. B. durch Spritzguß, Schäum-, Tiefzieh- und Blasform-Verfahren hergestellt werden. Diese Kunststoffe sind je nach ihrer Herstellungsart formstabil und zugleich doch in einem gewissen Rahmen elastisch genug, um den Eindruck einer Polsterung zu vermitteln.

Vorteilhafterweise sollte die Oberfläche der Seitenstütze glatt sein und auch ein gefälliges Äußeres bieten. Um dies zu erreichen, kann es mit Kunststoff-, Textilstoff oder Leder bezogen sein.

Als weitere vorteilhafte Ausgestaltung der Erfindung sind Haltevorrichtungen vorzusehen, die es ermöglichen, durch Kleben oder Schrauben die Seitenstütze im Bereich der Mittelkonsole bzw. am Kardantunnel zu befestigen. Zum Beispiel läßt sich das Stützelement durch Steck-, Schraub- oder auch Klettverschlüsse abnehmbar befestigen. Auch durch unterschiedlich übereinandergestapelte Halterungsgegenstücke ist die Höhenverstellbarkeit der Seitenstütze leicht möglich. Ein individuelles Eingehen auf unterschiedliche Körpergrößen ist dadurch erreichbar.

Darüber hinaus kann insbesondere das Basisteil, aber auch das Stützelement insgesamt, in verschiedenen Positionen variabel angebracht werden. Dieses läßt sich sehr einfach durch Zwischenstücke erreiche, die z. B. zwischen die an der Mittelkonsole befestigten Halterung und dem Gegenstück am Stüzelement eingebaut werden. Auch kann es sich hierbei um Keile oder Zwischenstücke handeln, die durch Klett- oder Haftverschlüsse an den entsprechenden Stellen des Stützelementes angebracht werden, so daß auch in horizontaler Richtung eine Verstellung möglich ist.

Ausführungsbeispiele der Erfindung werden in der Zeichnung dargestellt. Die Figuren der Zeichnung zeigen im einzelnen:
- Figur 1: einen Überblick des Fußraumes eines Kraftfahrzeuges mit eingebauter Seitenstütze gemäß Erfindung;
- Figur 2: einen Schnitt durch die Seitenstütze innerhalb des Fußraums;
- Figur 3: den unteren Teil der Seitenstütze mit Haltevorrichtungen;
- Figur 4: eine Seitenansicht der Seitenstütze;
- Figur 5: eine Seitenansicht, bei der die Seitenstütze mit einem Kardantunnel integriert ist;
- Figur 6: eine perspektivische Ansicht einer anderen Ausführungsform der Seitenstütze mit einem Schemelteil.

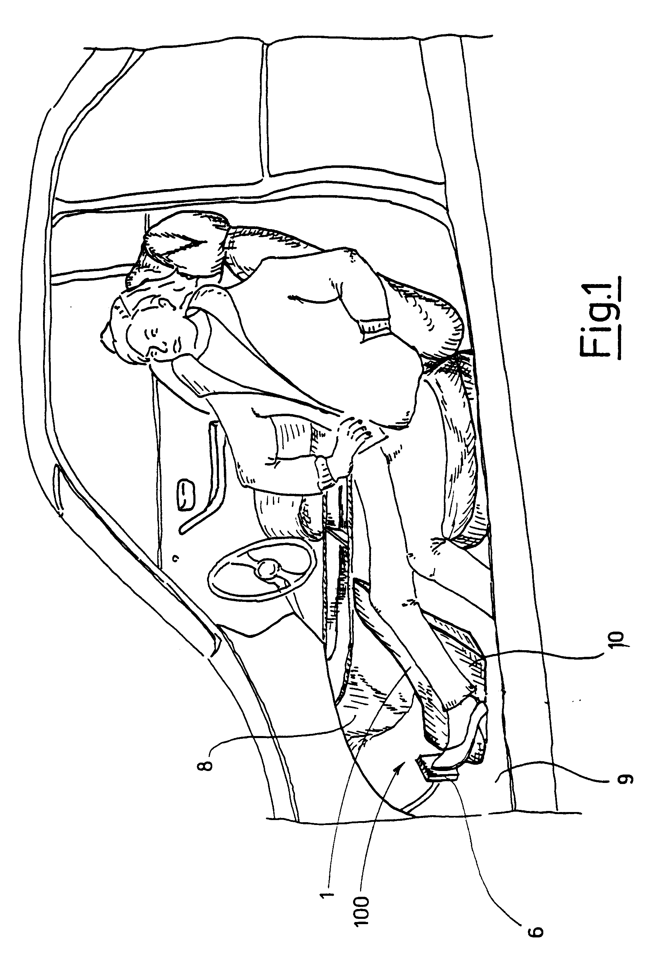

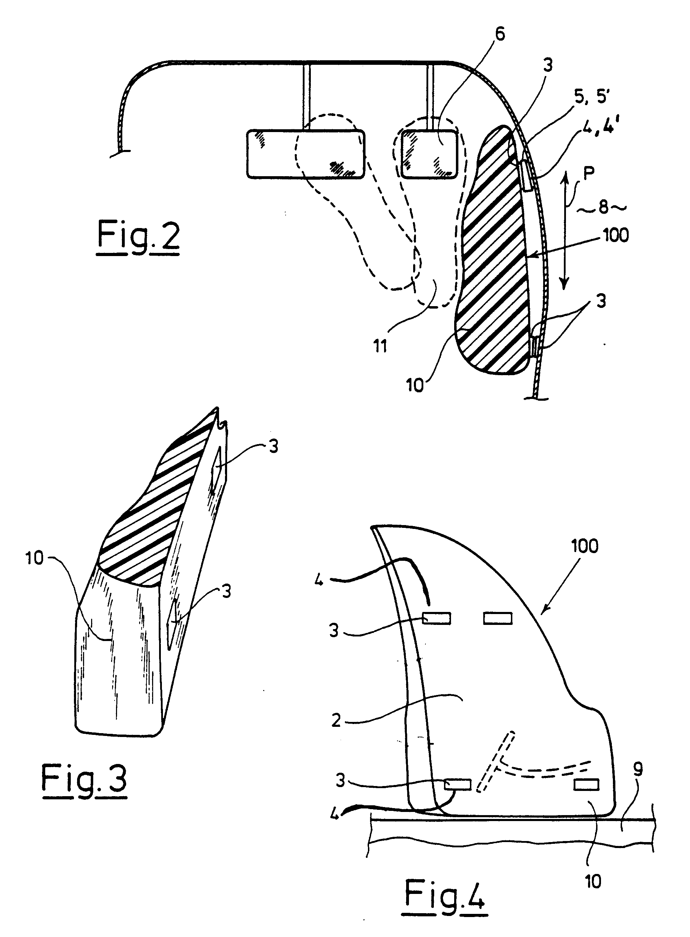

In der Figur 1 ist ein blick in den Sitzraum des Autofahrers dargestellt. Eine Seitenstütze 100 gemäß Erfindung ist so angeordnet, daß die rechte Ferse und der Unterschenkel des gashebelbedienenden Fußes gestützt werden. Die Seitenstütze 100 liegt an der Mittelkonsole 8 des Fahrraums an. Weiterhin steht sie auf der Fußbodenplatte 9 auf. Unmittelbar oberhalb der Fußbodenplatte hat die Seitenstütze 100 ein Basisteil 10 ausgebildet, das ein spitzwinklig-dreieckiges Prisma ist, wobei die beispielhaft gewählte Form angenähert aus der Schnittzeichnung durch das Basisteil gemäß Figur 2 hervorgeht.

Wie weiterhin aus der Figur 2 zu ersehen ist, liegt das Basisteil 10 der Seitenstütze 100 zwischen dem Gaspedal 6 und der Mittelkonsole 8. Die zum Fuß 11 hin zeigende Fläche des Basisteiles 10 ist entsprechend der Außenseite des Fußes modelliert. Das Basisteil kann in horizontaler Richtung entsprechend dem Pfeil P hin und her geschoben werden, wobei bei einem kleinen Fuß das Basisteil mehr nach vorne und bei einem großen Fuß mehr nach hinten verschoben wird.

Entlang des Unterschenkels des gasbedienenden Fußes setzt sich das Basisteil nach oben in eine Stützfläche 1 fort. Stützfläche 1 und Basiselement 10 bilden zusammen das Stützelement 2. Das Stützelement 2 wiederum ist über Halterungsvorrichtungen 3 mit der Mittelkonsole 8 verbunden. Die Halterungsvorrichtungen 3, schematisch in den Figuren 3 und 4 dargestellt, können beispielsweise aus einem Klebestreifen 4 oder aus einem Klettverschluß 4ʹ bestehen. Wesentlich ist, daß das Stützelement 2 unproblematisch und schnell gelöst oder verstellt werden kann.

Um die Seitenstütze 100 auch in horizontaler Richtung beweglich zu machen, wird zwische den Teil der Haltevorrichtung 3, der fest mittels Klebestreifen, Schraubung oder sonstigen Befestigungsvorrichtungen mit der Mittelkonsole befestigt ist, und dem Teil der Haltevorrichtung 3, der sich an dem Stützelement 2 befindet, ein Zwischenstreifen 5 oder aber ein Zwischenkeil 5ʹ eingeschoben. Hierdurch ist eine feste Verbindung unter Einhaltung eines bestimmten Abstandes möglich. Die Formen der Zwischenstücke 5 oder der Keile 5ʹ bestimmen sich nach dem seitlichen Abstand des Stützelementes 2 zur Mittelkonsole 8. Auf diese Weise kann sich der jeweilige Fahrer eine bequeme Sitzposition einstellen, so daß eine große Kontaktfläche 12 beim Anlegen des Fußes, des Fußgelenkes und des Unterschenkels entsteht.

Die Montage der Seitenstütze 100 gestaltet sich relativ einfach. Besteht die Seitenstütze lediglich aus einem Stützelement ohne besondere Halterungsvorrichtungen, so wird die Stützfläche direkt an der Mittelkonsole festgeklebt. Sind Halterungsvorrichtungen vorgesehen, so wird ein Teil des Klettverschlusses an der Mittelkonsole 8 befestigt und auf gleicher Höhe am Stützelement 2 der andere Teil des Klettverschlusses. Anschließend werden beide Teile des Klettverschlusses in Kontakt gebracht. In ähnlicher Weise kann auch die Höhe des Stützelementes verstellt werden. Sind mehrere Haftstreifen 4 des Klettverschlusses an der Mittelkonsole 8 übereinander befestigt, so läßt sich das entsprechende Gegenstück, welches sich an der Mittelkonsole befindet, problemlos in unterschiedlichen Höhen befestigen. Auch Steckverschlüsse, die in Verbindung zwischen Stützelement und Mittelkonsole stehen, ermöglichen eine Höhenverstellung, wenn entsprechen übereinandergestapelte Haltevorrichtungen vorgesehen sind.

Um darüber hinaus die Seitenstütze horizontalbeweglich zu machen, so daß insbesondere das Basisteil 10 sich dem Bein und Fuß des Fahrzeugführers individuell anpaßt, werden zwischen der Haltevorrichtung Keile oder Zwischenstücke montiert, die eine seitliche Variabilität ermöglichen. Wesentlich ist, daß eine stabile Fixierung des Basisteils und der Seitenstütze in Bezug auf das Fahrzeuginnere gewährleistet ist.

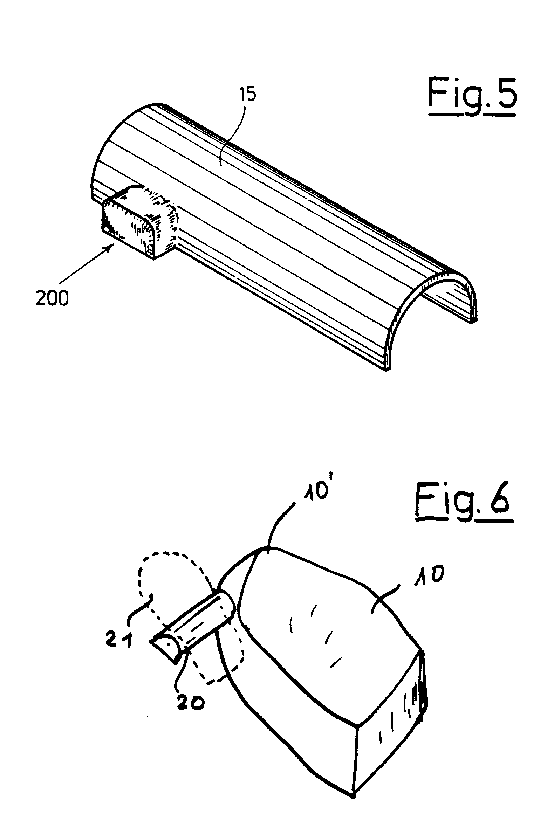

Es ist auch möglich, wie z. B. in Figur 5 dargestellt, eine Seitenstütze 200 sehr kompakt und flach auszuführen, wobei nur bis zu einer Höhe gerade über die Knöchelhöhe gegangen wird. Diese Seitenstütze 200 ist darüber hinaus mit einem Kardantunnel 15 integriert. Dazu ist der Kardantunnel seitlich mit einer Ausbeulung versehen, die mit Kunststoffschaum abgepolstert ist. Eine Kunststoff-Haut, die in ihrer Farbe der übrigen Oberfläche des Kardantunnels angepaßt ist, bildet den äußeren Abschluß.

In einem weiteren Ausführungsbeispiel kann die mit dem Kardantunnel integrierte Seitenstütze über die Knöchelhöhe hinausragen und bis zur Knieaußenseite reichen. Die mit Kunststoffschaum ausgepolsterte Ausbeulung des Kardantunnels erstreckt sich dabei von der Fußbodenplatte bis zur Kniehöhe. Auch Zwischenhöhen der Seitenstütze sind denkbar. Ebenfalls ist es möglich, daß die Seitenstütze nicht durchgängig ist, sondern lediglich auf Höhe des Knöchels und kurz unterhalb des Kniegelenks abstützend anliegt.

Bei den bisher beschriebenen Ausführungsformen der Erfindung war Linkssteuerung des Fahrzeuges vorausgesetzt. Eine solche Seitenstütze kann jedoch auch in Fahrzeuge eingebaut werden, die eine Rechtssteuerung besitzen. Hier wird die Seitenstütze an der Außenwand des Fahrzeuginnenraumes befestigt. Auch bei Fahrzeugen mit Rechtssteuerung ist es das rechte Bein, das das Gas- und Bremspedal bedient.

Wenn auch in dieser Anmeldung von Gaspedal gesprochen wurde, fällt selbstverständlich auch das Beschleunigungs- oder Fahrpedal von Diesel - und Elektrofahrzeugen unter diesen Begriff.

Figur 6 zeigt eine weitere Ausführungsform einer Seitenstütze, ähnlich wie die der Figur 3. Im vorliegenden Falle ist das prismatische Basisteil 10 im Bereich seiner Spitze 10ʹ mit einem seitlich herausragenden, im wesentlichen festen Schemelteil 20 verbunden, auf das die Schuhsohle 21, gestrichelt gezeichnet, des gasbedienenden Fußes aufgesetzt werden kann. Das Schemelteil 20 kommt dabei in der Vertiefung zwischen Absatz und Sohle zu liegen, wobei der Fuß einen festen Halt auch nach vorne findet. Das Schemelteil ist üblicherweise aus einem Kunststoff-Profil gefertigt und hat eine nach oben gewölbte zylindrische oder abgeflacht-zylindrische Form. Vorzugsweise kann das Schemelteil 20 auch einschiebbar gestaltet sein, d.h., je nach Bedarf herausgezogen oder hineingeschoben werden.

## Patentansprüche

1. Seitenstütze zum Einbau in den Fußraum von Kraftfahrzeugen auf der rechten Fahrerseite, mit der wenigstens die rechte Ferse des gashebelbedienenden Fußes gestützt werden kann, dadurch gekennzeichnet, daß die Seitenstütze (100) wenigstens ein spritzwinklig-dreieckiges, prismatisches Basisteil (10) aufweist, das bis über die Knöchelhöhe des Fußes reicht.

2. Seitenstütze nach Anspruch 1, dadurch gekennzeichnet, daß sich nach oben an das Basisteil (10) eine im wesentlichen durchgehende, bis in Kniehöhe reichende, anatomisch modulierte Stützfläche (1) anschließt, wobei Basisteil und Stützfläche zusammen ein Stützelement (2) ergeben.

3. Seitenstütze nach Anspruch 1 oder 2, dadurch gekennzeichnet, daß Basisteil (10) und Seitenstütze (1) gepolstert sind.

4. Seitenstütze nach Anspruch 2, dadurch gekennzeichnet, daß sie als Ganzes aus einem überzogenen Kunststoffkörper hergestellt ist.

5. Seitenstütze nach den Ansprüchen 1 bis 4, dadurch gekennzeichnet, daß das Stützelement (2) mit wenigstens einer Haltevorrichtung (3) verbunden ist und gegenüber der oder den Haltevorrichtung(en) (3) höhenverstellbar ist.

6. Seitenstütze nach Anspruch 4, dadurch gekennzeichnet, daß die Haltevorrichtung (3) ein Klettstreifen (4) oder ein Klettverschluß (4ʹ) ist.

7. Seitenstütze nach einem der vorherigen Ansprüche, dadurch gekennzeichnet, daß das Stützelement durch Zwischenstücke (5) oder Keile (5ʹ) seitenverstellbar ist.

8. Seitenstütze nach Anspruch 1 bis 7, dadurch gekennzeichnet, daß die Seitenstütze (200) einstückig mit einem als Kunststoffteil hergestellten Kardantunnel (15) integriert ist.

9. Seitenstütze nach Anspruch 1 bis 8, dadurch gekennzeichnet, daß das prismatische Basisteil (10) im Bereich seiner Spitze (10ʹ) mit einem seitlich herausragenden, im wesentlichen festen Schemelteil (20) verbunden ist, auf das die Schuhsohle (21) des gasbedienenden Fußes aufgesetzt werden kann.

10. Seitenstütze nach Anspruch 9, dadurch gekennzeichnet, daß das Schemelteil (20) eine zylindrische oder abgeflachtzylindrische Form hat.

11. Seitenstütze nach Anspruch 9 und 10, dadurch gekennzeichnet, daß das Schemelteil (20) in das Basisteil (10) einschiebbar ist.

## Claims

1. A side support for placing in the foot well of motor vehicles to the right of the driver, the support being adapted to support at least the right side of the heel of the accelerator-operating foot, characterised in that the side support (100) has at least one prismatic base part (10) which is in the form of an acute-angled triangle and which extends to above ankle height.

2. A side support according to claim 1, characterised in that the base part (10) merges upwardly into a substantially continuous anatomically shaped support surface (1) which extends to knee height, the base part and the support surface co-operating to form a support element (2).

3. A side support according to claim 1 or 2, characterised in that the base part (10) and side support (1) are upholstered.

4. A side support according to claim 2, characterised in that it is produced as a whole from a covered plastics member.

5. A side support according to claims 1 to 4, characterised in that the support element (2) is connected to at least one retaining device (3) and is adjustable vertically relatively to the or each such device (3).

6. A side support according to claim 4, characterised in that the retaining device (3) is a hook and loop strip (4) or a hook and loop fastening (4').

7. A side support according to any of the preceding claims, characterised in that the support element is laterally adjustable by intermediate members (5) or wedges 5'.

8. A side support according to claims 1 to 7, characterised in that the side support (200) is unitary with a transmission shaft tunnel (15) produced as a plastics part.

9. A side support according to claims 1 to 8, characterised in that the prismatic base part (10) is connected near its apex (10') to a laterally projecting substantially rigid rest (20) on which the shoe sole (21) of the driver's accelerator-controlling foot can be placed.

10. A side support according to claim 9, characterised in that the rest (20) is in the form of a cylinder or faceted cylinder.

11. A side support according to claims 9 and 10, characterised in that the rest (20) is introducible into the base part (10).

## Revendications

1. Repose-pieds latéral destiné à être monté dans la partie inférieure de l'habitacle de véhicules automobiles, sur la droite du côté conducteur et permettant de soutenir au moins le talon droit du pied appuyant sur l'accélérateur, caractérisé en ce que le repose-pieds latéral (100) présente au moins une pièce de base (10) en forme de prisme triangulaire à angle aigu qui s'étend jusqu'à la hauteur de la cheville du pied.

2. Repose-pieds latéral selon la revendication 1, caractérisé en ce que la pièce de base (10) se prolonge vers le haut par une surface d'appui (1) qui est sensiblement continue, s'étend jusqu'à la hauteur du genou et est adaptée à l'anatomie, la pièce de base et la surface d'appui formant ensemble un élément d'appui (2).

3. Repose-pieds latéral selon la revendication 1 ou 2, caractérisé en ce que la pièce de base (10) et le repose-pieds latéral (1) sont rembourrés.

4. Repose-pieds latéral selon la revendication 2, caractérisé en ce qu'il est fabriqué en totalité à partir d'un corps en matière plastique muni d'un revêtement.

5. Repose-pieds latéral selon les revendications 1 à 4, caractérisé en ce que l'élément d'appui (2) est relié à au moins un dispositif de fixation (3) et est réglable en hauteur par rapport au ou aux dispositif(s) de fixation (3).

6. Repose-pieds latéral selon la revendication 4, caractérisé en ce que le dispositif de fixation (3) est une bande collante (4) ou une fermeture collante (4').

7. Repose-pieds latéral selon l'une des revendications précédentes, caractérisé en ce que l'élément d'appui est réglable latéralement par des pièces intermédiaires (5) ou des clavettes (5').

8. Repose-pieds latéral selon les revendications 1 à 7, caractérisé en ce que le repose-pieds (200) est intégré d'une seule pièce avec un tunnel cardan (15) fabriqué sous forme de pièce en matière plastique.

9. Repose-pieds selon les revendications 1 à 8, caractérisé en ce que la pièce de base (10) prismatique est reliée dans la région de sa pointe (10') à une pièce transversale d'appui (20) qui fait saillie latéralement, est pour l'essentiel rigide et sur laquelle la semelle de chaussure (21) du pied appuyant sur l'accélérateur peut être posée.

10. Repose-pieds latéral selon la revendication 9, caractérisé en ce que la pièce transversale d'appui (20) a une forme cylindrique ou cylindrique aplatie.

11. Repose-pieds latéral selon les revendications 9 et 10, caractérisé en ce que la pièce transversale d'appui (20) peut être glissée dans la pièce de base (10).
